# EUROPEAN PATENT APPLICATION

(11) **EP 3 026 623 A1**
(43) Date of publication of application: **01.06.2016**
(21) Application number: 15196202.4
(22) Date of filing: 25.11.2015
(51) Int. Cl.: G06Q 30/02, G06Q 50/00

(54) **ELECTRONIC APPARATUS AND ITEM INFORMATION PROVIDING METHOD THEREOF**

(30) Priority: 25.11.2014 KR 20140165666
(71) Applicant: Samsung Electronics Co., Ltd., Gyeonggi-do 16677 (KR)
(72) Inventor: Chung, Hae Kwon, 05658 Seoul (KR); Kim, Duk Kyoo, 06233 Seoul (KR); Lee, Sang Jae, 16051 Uiwang-si (KR); Lee, Seung Jae, 05409 Seoul (KR)
(74) Representative: Nederlandsch Octrooibureau

(57) **Abstract**

An electronic device and item information providing are provided. The electronic device includes a communication module configured to receive item information of at least one item from a management server, a display configured to display a user interface including the item information, an input module configured to receive a user input selecting an item from among the displayed item information, a sensor module configured to collect motion data of the electronic device, and a control module configured to check a mission corresponding to the selected item and to transmit mission performance information, obtained based on the motion data, to the management server through the communication module.

## Description

### Priority

This application claims priority to a Korean Patent Application filed in the Korean Intellectual Property Office on November 25, 2014 and assigned Serial No. 10-2014-0165666.

### BACKGROUND

### 1. Field of the Disclosure

The present disclosure relates generally to providing item information to a user, and more particularly, to an electronic device providing item information to a user and an item information providing method thereof.

### 2. Description of the Related Art

Item information (i.e., information about a particular item or product) has conventionally been provided in the form of advertisements through a television, a radio, and the like. Due to the advancement of electronic technologies, various electronic devices are being developed, and the propagation of electronic devices is increasing. Accordingly, item information may be provided to a user through an electronic device in various manners.

When using various services through an electronic device, a user may be provided with item information in the form of a banner or during a specific time.

According to the above-described methods of providing item information, a user is hindered from being immersed in the service, and the user may be provided with item information at an undesirable time. Under these conditions, an item corresponding to the item information may be negatively perceived by the user.

### SUMMARY

The present disclosure has been made to address at least the above problems and/or disadvantages and to provide at least the advantages described below.

Accordingly, an aspect of the present disclosure provides an electronic device, which provides a user with a variety of item information, gives a mission about an item selected by a user, and provides a reward based on a mission progress state, and an item information providing method thereof.

In addition, another aspect of the present disclosure provides an electronic device that continuously exposes a selected item to a user, while the user performs a mission about the selected item, and an item information providing method thereof.

In accordance with an aspect of the present disclosure, an electronic device is provided. The electronic device includes a communication module configured to receive item information of at least one item from a management server; a display configured to display a user interface (UI) including the item information; an input module configured to receive a user input selecting an item from among the displayed item information; a sensor module configured to collect motion data of the electronic device; and a control module configured to check a mission corresponding to the selected item and to transmit mission performance information, obtained based on the motion data, to the management server through the communication module.

In accordance with an aspect of the present disclosure, an item information providing method of an electronic device is provided. The item information providing method includes receiving item information of at least one item from a management server; displaying a user interface (UI) including the item information; receiving a user input selecting an item from among the displayed item information; checking a mission corresponding to the selected item; collecting motion data of the electronic device; obtaining mission performance information based on the motion data; and transmitting the mission performance information to the management server.

In accordance with an aspect of the present disclosure, a non-transitory computer-readable recording medium recorded with computer executable instructions stored thereon executed by a processor to perform a method is provided. The method includes receiving item information of at least one item from a management server; displaying a user interface (UI) including the item information; receiving a user input selecting an item from among the displayed item information; checking a mission corresponding to the selected item; collecting motion data of the electronic device; obtaining mission performance information based on the motion data; and transmitting the mission performance information to the management server.

In accordance with an aspect of the present disclosure, a management server is provided. The management server includes a communication module configured to receive item information of at least one item from an advertiser server, to transmit the item information to an electronic device, and receive mission performance information regarding the at least one item from the electronic device; a memory configured to store the received mission performance information received; and a control module configured to determine whether a mission is completed, based on the mission performance information, and to provide, through the communication module, a mission completion reward to the electronic device if the mission is completed.

In accordance with an aspect of the present disclosure, an item information providing method of a management server is provided. The item information providing method includes a communication module configured to receive item information of at least one item from an advertiser server, to transmit the item information to an electronic device, and receive mission performance information regarding the at least one item from the electronic device; a memory configured to store the received mission performance information received; and a control module configured to determine whether a mission is completed, based on the mission performance information, and to provide, through the communication module, a mission completion reward to the electronic device if the mission is completed.

### BRIEF DESCRIPTION OF THE DRAWINGS

The above and other aspects, features, and advantages of certain embodiments of the present disclosure will be more apparent from the following description when taken in conjunction with the accompanying drawings, in which:
FIG. 1 illustrates an item information providing system according to an embodiment of the present disclosure;
FIG. 2 is a flow chart illustrating an item information providing method of an item information providing system according to an embodiment of the present disclosure;
FIG. 3 is a flow chart illustrating a mission performance information obtaining method of an item information providing system according to an embodiment of the present disclosure;
FIG. 4 is a flow chart illustrating a group operating method of an item information providing system according to an embodiment of the present disclosure;
FIG. 5 illustrates an electronic device according to an embodiment of the present disclosure;
FIG. 6 illustrates a UI displayed on an electronic device according to an embodiment of the present disclosure;
FIGs. 7A and 7B illustrate UIs displayed on an electronic device according to an embodiment of the present disclosure;
FIGs. 8A to 8D illustrate UIs displayed on an electronic device according to an embodiment of the present disclosure;
FIGs. 9A and 9B illustrate UIs displayed on an electronic device according to an embodiment of the present disclosure;
FIGs. 10A to 10C illustrate UIs displayed on an electronic device according to an embodiment of the present disclosure;
FIGs. 11A and 11B illustrate UIs displayed on an electronic device according to an embodiment of the present disclosure;
FIG. 12 illustrates a UI displayed on an electronic device according to various embodiments of the present disclosure;
FIG. 13 illustrates a page placement state of an UI according to an embodiment of the present disclosure;
FIG. 14 illustrates a configuration of a management server according to an embodiment of the present disclosure;
FIG. 15 is a flow chart illustrating an item information providing method of an electronic device according to an embodiment of the present disclosure; and
FIG. 16 is a flow chart illustrating an item information providing method of a management server according to an embodiment of the present disclosure.

Throughout the drawings, it should be noted that like reference numbers are used to depict the same or similar elements, features, and structures.

### DETAILED DESCRIPTION

Various embodiments of the present disclosure are described in detail with reference to the accompanying drawings. Detailed descriptions of constructions or processes known in the art may be omitted to avoid obscuring the subject matter of the present disclosure.

The expressions "have", "may have", "include" and "comprise", or "may include" and "may comprise", as used herein, indicate the existence of corresponding features (e.g., elements such as numeric values, functions, operations, or components), but do not exclude the presence of additional features.

The expressions "A or B", "at least one of A or/and B", and "one or more of A or/and B", and the like, as used herein, indicate the inclusion of any and all combinations of one or more of the associated listed items. For example, the terms "A or B", "at least one of A and B", and "at least one of A or B" may indicate scenarios (1) where at least one A is included, (2) where at least one B is included, or (3) where at least one A and at least one B are included.

Terms, such as "first", "second", and the like, as used herein, may modify various elements of various embodiments of the present disclosure, but do not limit the elements. For example, such terms do not limit the order and/or priority of the elements. Further, such terms may be used to distinguish one element from another element. For example, "a first user device" and "a second user device" may indicate different user devices. For example, without departing the scope of embodiments according to the present disclosure, a first element may be referred to as a second element, and similarly, a second element may be referred to as a first element.

When an element (e.g., a first element) is referred to as being "(operatively or communicatively) coupled with/to" or "connected to" another element (e.g., a second element), the element can be directly coupled with/to or connected to the other element, or an intervening element (e.g., a third element) may be present. However, when an element (e.g., a first element) is referred to as being "directly coupled with/to" or "directly connected to" another element (e.g., a second element), no intervening elements (e.g., a third element) are present.

The expression "configured to", as used herein, may be interchangeable with, for example, the expression "suitable for", "having the capacity to", "designed to", "adapted to", "made to", or "capable of". The term "configured to" is not limited to merely meaning "specifically designed to" in hardware. Instead, the expression "a device configured to" may mean that the device is "capable of" operating together with another device or other components. For example, a "processor configured to perform A, B, and C" may refer to a dedicated processor (e.g., an embedded processor) for performing a corresponding operation or a generic-purpose processor (e.g., a central processing unit (CPU) or an application processor) which may perform corresponding operations by executing one or more software programs stored in a memory device.

Terms used in this disclosure are used to describe specified embodiments of the present disclosure and are not intended to limit the scope of the present disclosure. Terms presented in a singular form may include plural forms unless otherwise specified. Unless otherwise defined herein, all the terms used herein, which include technical or scientific terms, may have the same definitions that are generally understood by a person skilled in the art. It will be further understood that terms that are commonly used and defined in a dictionary, are be interpreted as is customary in the relevant related art and not in an idealized or overly formal detect unless expressly so defined herein in various embodiments of the present disclosure. Terms defined in the specification, are not to be interpreted in a manner that excludes embodiments of the present disclosure.

An electronic device may include, for example, smartphones, tablet personal computers (PCs), mobile phones, video telephones, electronic book readers, desktop PCs, laptop PCs, netbook computers, workstations, servers, personal digital assistants (PDAs), portable multimedia players (PMPs), Motion Picture Experts Group (MPEG-1 or MPEG-2) Audio Layer 3 (MP3) players, mobile medical devices, cameras, wearable devices (e.g., head-mounted-devices (HMDs), such as electronic glasses), an electronic apparel, electronic bracelets, electronic necklaces, electronic appcessories, electronic tattoos, smart watches, and the like.

Herein, electronic devices may also be smart home appliances. Smart home appliances may include, for example, televisions (TVs), digital versatile disc (DVD) players, audios, refrigerators, air conditioners, cleaners, ovens, microwave ovens, washing machines, air cleaners, set-top boxes, TV boxes (e.g., Samsung HomeSync^{™}, Apple TV^{™}, or Google TV^{™}), game consoles (e.g., Xbox^{™} and PlayStation^{™}), electronic dictionaries, electronic keys, camcorders, electronic picture frames, and the like.

Herein, electronic devices may also include medical devices (e.g., various portable medical measurement devices (e.g., a blood glucose monitoring device, a heartbeat measuring device, a blood pressure measuring device, a body temperature measuring device, and the like)), a magnetic resonance angiography (MRA), a magnetic resonance imaging (MRI), a computed tomography (CT), scanners, and ultrasonic devices) receiving a user input in an idle mode, navigation devices, global positioning system (GPS) receivers, event data recorders (EDRs), flight data recorders (FDRs), vehicle infotainment devices, electronic equipment for vessels (e.g., navigation systems and gyrocompasses), avionics, security devices, head units for vehicles, industrial or home robots, automatic teller's machines (ATMs), points of sales (POSs), or internet of things (e.g., light bulbs, various sensors, electric or gas meters, sprinkler devices, fire alarms, thermostats, street lamps, toasters, exercise equipment, hot water tanks, heaters, boilers, and the like).

Herein, electronic devices may also include furniture or buildings/structures, electronic boards, electronic signature receiving devices, projectors, or various measuring instruments (e.g., water meters, electricity meters, gas meters, or wave meters, and the like). The electronic devices according to an embodiment of the present disclosure may include one or more combinations of the above-mentioned devices. An electronic device may be a flexible electronic device. Also, an electronic devices are not limited to the above-described devices, and may include new electronic devices according to developments in technology

The term "user", as used herein, may refer to a person who uses an electronic device or may refer to a device (e.g., an artificial intelligence electronic device) that uses an electronic device.

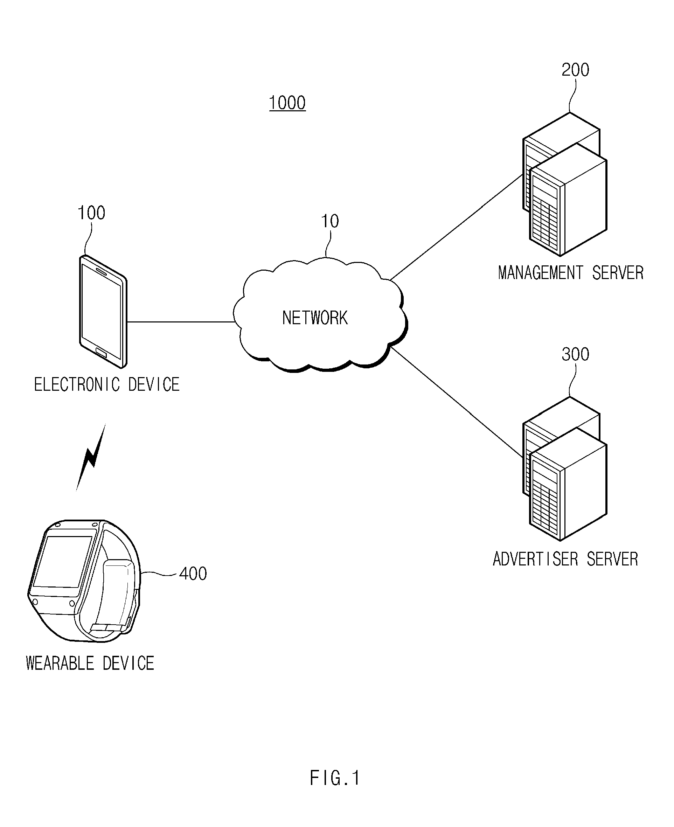

FIG. 1 illustrates an item information providing system according to an embodiment of the present disclosure.

An item information providing system 1000 according to an embodiment of the present disclosure may provide a user with information about various items. If a user performs a mission given with respect to each item and a mission is completed, the user may obtain a reward according to the completion. An advertiser (or sponsor) may provide information about a specific item and can advertise the specific item. The advertiser may provide a reward to the user.

Referring to FIG. 1, the item information providing system 1000 includes an electronic device 100, a management server 200, an advertiser server 300, and a wearable device 400.

The electronic device 100, the management server 200, and the advertiser server 300 may be connected to each other through a network 10 for communication. For example, the electronic device 100, the management server 200, and the advertiser server 300 may be connected to each other through an internet network or a mobile communication network.

The electronic device 100 may execute an item information providing application to connect with the management server 200 and may receive and display item information regarding at least one item from the management server 200. A user may check item information displayed on the electronic device 100 to select a specific item and perform a corresponding mission (e.g., to walk 500,000 steps or to run 100,000 steps) corresponding to the selected item. The mission may be a mission associated with physical activities such as walking, running, cycling, and the like. The mission may include a personal mission given to a user upon selecting a specific item, and/or a group mission given to all members included in a group associated with the specific item. The electronic device 100 may obtain mission performance information (e.g., a step count, a pedaling cadence, and the like) of a user. For example, the electronic device 100 may collect motion data of the electronic device 100 using an acceleration sensor, a gyro sensor, a GPS sensor, and the like and may obtain mission performance information using the collected motion data. The electronic device 100 may transmit the obtained mission performance information to the management server 200.

If electronic device 100 obtains the mission performance information, the electronic device 100 may check the mission performance information. The electronic device 100 may display selected item information, if the mission performance information corresponds to a predefined state (e.g., mission performance of 50% or mission performance of 70%). The electronic device 100 may check the amount of time remaining until a mission end time and may display the selected item information based on the checked time. For example, when the time remaining until a mission end time is one day (or 12 hours), the electronic device 100 may display the selected item information.

The management server 200 may transmit the item information to the electronic device 100. The management server 200 may provide the electronic device 100 with additional item information (e.g., a ranking of all users selecting an item, the rest of a reward according to mission completion, the time until a mission end time, and the like) generated according to mission progress, as well as item information received from the advertiser server 300. The management server 200 may receive the mission performance information from the electronic device 100. The management server 200 may determine whether a mission is completed using the mission performance information of a user. If the mission is completed, the management server 200 may provide a reward according to mission completion (hereinafter referred to as "mission completion reward") to a user. The mission completion reward may include a coupon of a tangible item, such as food, electronic goods, clothes, and the like, a ticket (or a coupon) of an intangible item corresponding to a particular facility (e.g., a water park ticket, a movie ticket, an amusement park ticket, a fitness center ticket, and the like), and the like. The mission completion reward may relate to an item selected by a user. For example, a coupon or a ticket of an item selected by a user may be provided. The mission completion reward may be provided in the form of a bar code, a quick response (QR) code, a number code, a near field communication (NFC) stamp, and the like.

The management server 200 may transmit statistical information to the advertiser server 300. For example, the management server 200 may transmit an age, a sex, a simultaneously selected item, a mission progress state, an item exposure count, an item selection count, a mission completion count, and the like, based upon which users may select an item provided by the advertiser server 300.

The advertiser server 300 may transmit item information to the management server 200. The item information may include, for example, an item name, an item image, a price, a production date, a mission given to an item, a mission completion reward, a deadline for mission completion, quantity of a mission completion reward, and the like. The item information providing system 1000 may include a plurality of advertiser servers 300. For example, the item information providing system 1000 may include the advertiser server 300 for a company which uses an item information providing service.

The wearable device 400 may connect with the electronic device 100 for communication. For example, the wearable device 400 may connect with the electronic device 100 using a near field communication technology such as Bluetooth, wireless-fidelity (Wi-Fi), and the like. The wearable device 400 may be placed on a user's body to obtain mission performance information. For example, the wearable device 400 may collect motion data of the wearable device 400 using an acceleration sensor, a gyro sensor, a GPS, and the like, and may obtain mission performance information, such as a step count, a pedaling cadence, a moving distance, an altitude, a direction, and the like, based on the collected motion data. The wearable device 400 may transmit the collected mission performance information to the electronic device 100. The wearable device 400 may be implemented in the form of various wearable devices, for example, a smart glasses, a smart watch, a smart band, a smart ring, and the like.

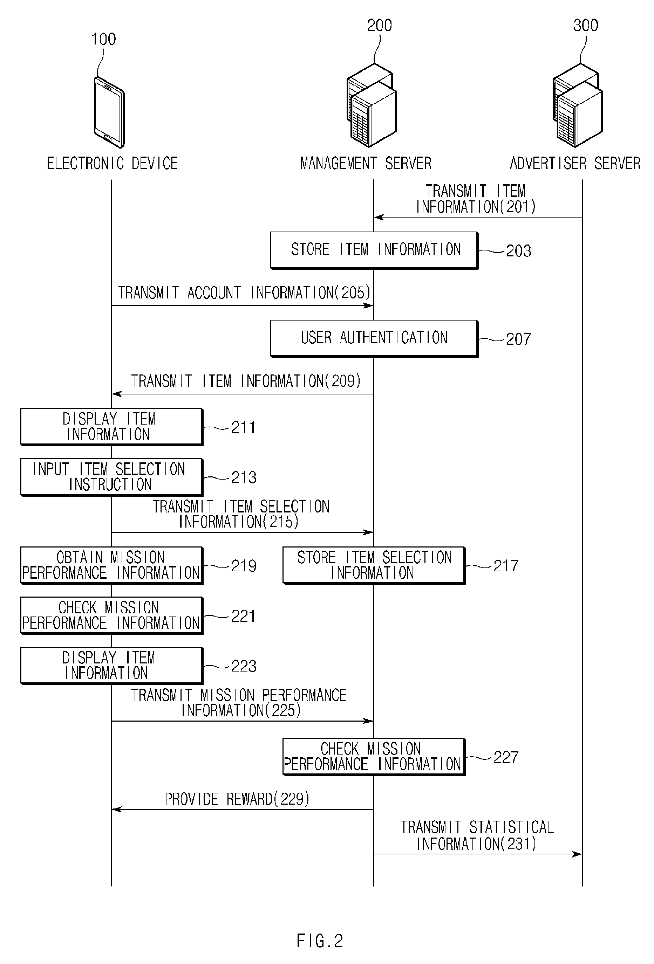

FIG. 2 is a flow chart illustrating an item information providing method of an item information providing system according to an embodiment of the present disclosure.

Referring to FIG. 2, in step 201, the advertiser server 300 transmits item information to the management server 200.

In step 203, the management server 200 stores the item information received from the advertiser server 300. The management server 200 may update or delete previously stored item information.

In step 205, the electronic device 100 transmits account information to the management server 200. For example, the electronic device 100 may execute an item information providing application in response to user manipulation of the electronic device 100 (i.e., a user input with respect to the electronic device 100). If the application is executed, the electronic device 100 may transmit the account information to the management server 200 in response. The account information may include, for example, an account ID and password or identification information (e.g., mobile subscriber integrated services digital network (ISDN) number (MSISDN), international mobile equipment identity (IMEI), electronic serial number (ESN), and the like) of the electronic device 100. The account information may be linked with account information that is used on a social networking service (SNS) (e.g., Facebook^{™} or Twitter^{™}). When the account information is linked with SNS account information, a friend list and the like on the SNS service may be shared.

In step 207, the management server 200 performs user authentication using the account information received from the electronic device 100. If the user authentication is completed, in step 209, the management server 200 transmits item information to the electronic device 100. If the item information is updated, the management server 200 may transmit the updated item information to the electronic device 100. For example, if additional item information (e.g., a ranking of all users selecting an item, the remainder of a mission completion reward, the time remaining until a mission end time, and the like) is produced according to mission progress, the management server 200 may transmit the updated item information to the electronic device 100.

In step 211, the electronic device 100 displays the item information received from the management server 200. For example, the electronic device 100 may display a user interface (UI) including item information. The UI may include pages associated with under-selection item information, provided reward information, all item information, recommendation item information, and friend invitation information. A plurality of information pages included in the UI may be moved to another page through the recommendation item information page.

In step 213, the electronic device 100 receives an item selection instruction, used to select an item, from a user. In step 215, the electronic device 100 transmits item selection information to the management server 200. For example, the electronic device 100 may transmit, to the management server 200, identification information of an item selected by the user.

If the item selection information is received, in step 217, the management server 200 stores the received item selection information. The management server 200 may store the item selection information in connection with account information of a user.

In step 219, the electronic device 100 obtains mission performance information corresponding to the selected item. For example, the electronic device 100 may obtain information such as a step count, a pedaling cadence, a moving distance, an attitude, a direction, and the like of a user. If the mission performance information is obtained, in step 221, the electronic device 100 checks the obtained mission performance information. If the mission performance information corresponds to a predefined state (e.g., mission progress of 30%, mission progress of 50%, or mission progress of 70%), in step 223, the electronic device 100 displays item information of the selected item. The electronic device 100 may display the item information of the selected item based on the time remaining until a mission end time. For example, if the time until a mission end time is three days, one day, or six hours, for example, the electronic device 100 may display the item information of the selected item. The electronic device 100 may display item information using push notification (e.g., when an item information providing application is not executed) or a notification window (e.g., when the item information providing application is executed). The electronic device 100 may display item information of another item associated with the mission performance information or the selected item, together with the item information of the selected item. The electronic device 100 may provide a user with item information based on mission performance information of the user, thereby making it possible to induce the user to perform a mission and to increase the number of events that expose a user to an item.

If the mission performance information is obtained, in step 225, the electronic device 100 transmits the mission performance information to the management server 200.

If the management server 200 receives the mission performance information from the electronic device 100, in step 227, the management server 200 may check whether a mission is completed, based on the mission performance information of the user. If the mission performance is determined as being completed, in step 229, the management server 200 may provide a mission completion reward. The management server 200 may provide the mission completion reward in the forms of a QR code, a number code, an NFC stamp, and the like. When a group mission is given with respect to a selected item, the management server 200 may check whether the group mission is completed, based on a total (e.g., a sum) of mission performance information of all members in a specific group. If the group mission is completed, the management server 200 may provide a reward according to completion of the group mission (hereinafter referred to as "group mission completion reward") to all members in a corresponding group.

In step 231, the management server 200 transmits statistical information to the advertiser server 300. For example, the management server 200 may transmit an age, a sex, a simultaneously selected item, a mission progress state, an item exposure count, an item selection count, a mission completion count, and the like of users that select an item provided by the advertiser server 300.

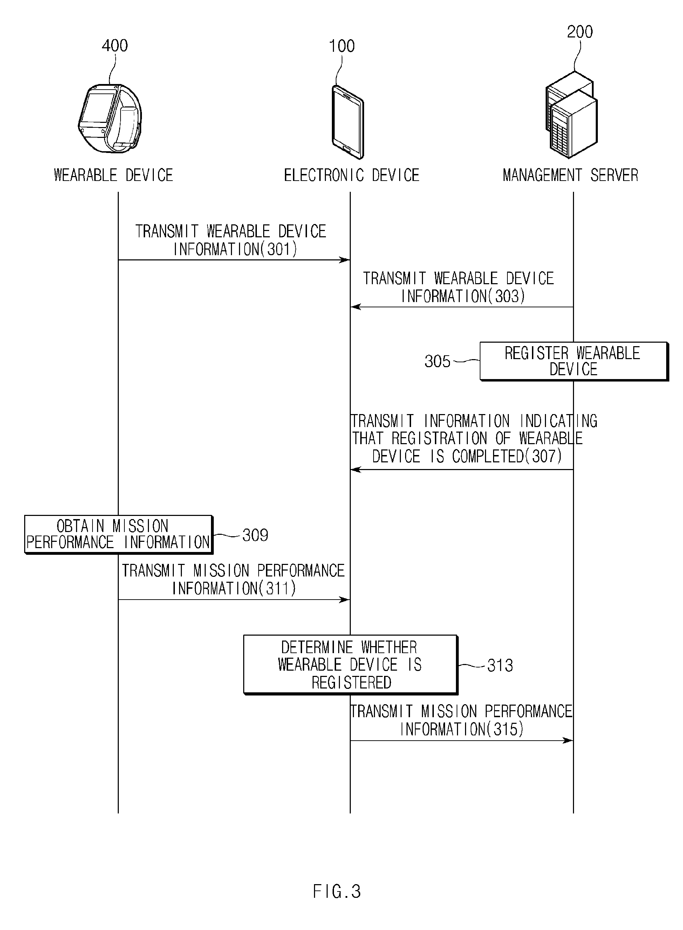

FIG. 3 is a flow chart illustrating a mission performance information obtaining method of an item information providing system according to an embodiment of the present disclosure. In the method of FIG. 3, mission performance information is obtained by the wearable device 400.

Referring to FIG. 3, the wearable device 400 transmits wearable device information to the electronic device 100. The wearable device information may include, for example, an ESN, a media access control (MAC) address, or a Bluetooth address of the wearable device 400.

In step 303, the electronic device 100 transmits the wearable device information to the management server 200.

If the wearable device information is received from the electronic device 100, in step 305, the management server 200 registers a wearable device. For example, the management server 200 may store the wearable device information in connection with account information received from the electronic device 100.

If the wearable device is registered, in step 307, the management server 200 transmits information indicating that registration of the wearable device is completed.

In step 309, the wearable device 400 obtains mission performance information. For example, the wearable device 400 may obtain information, such as a step count, a pedaling cadence, a moving distance, an altitude, a direction, and the like of a user. In step 311, the wearable device 400 transmits the collected mission performance information to the electronic device 100.

In step 313, the electronic device 100 determines whether the wearable device 400, which has transmitted the mission performance information, is a registered device registered. For example, the electronic device 100 may compare device identification information of the wearable device 400 with device identification information registered at the management server 200. If the wearable device 400 is a registered device, in step 315, the electronic device 100 transmits the mission performance information to the management server 200. If the wearable device 400 is a registered device, the electronic device 100 may include mission performance information from the wearable device 400 when checking the mission performance information.

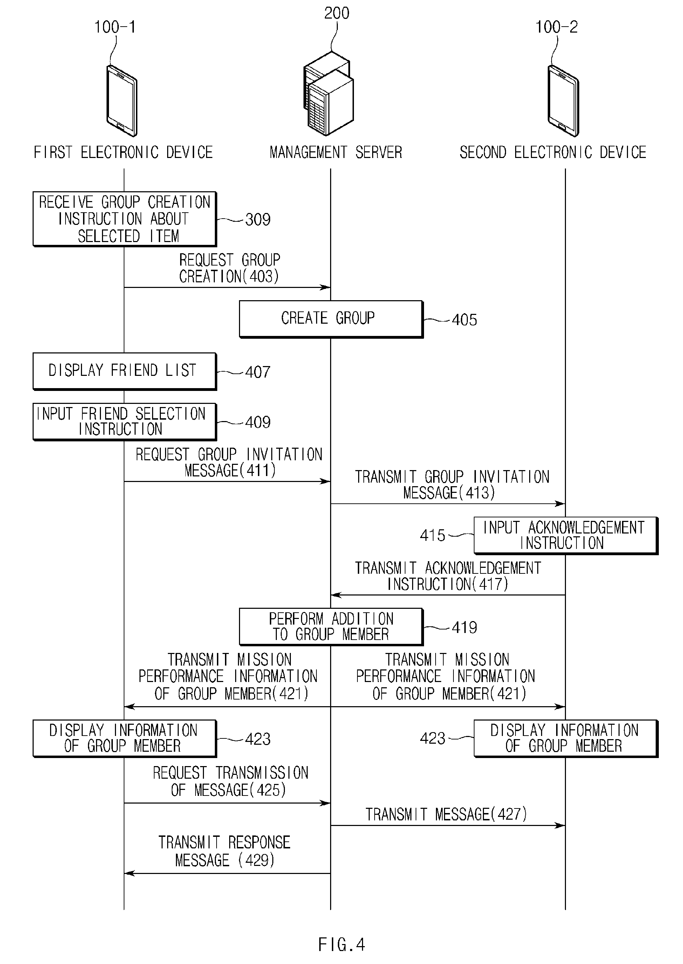

FIG. 4 is a flow chart illustrating a group operating method of an item information providing system according to an embodiment of the present disclosure.

Referring to FIG. 4, in step 401, a first electronic device 100-1 receives, from a user, a group creation instruction with respect to a selected item. In step 403, the first electronic device 100-1 sends a request to the management server 200 to create a group.

In step 405, the management server 200 creates the requested group.

In step 407, the first electronic device 100-1 displays a friend list. The friend list may include, for example, a list stored at an address book or a friend list of an SNS service when account information of the first electronic device 100-1 is linked with the SNS service. In step 409, the first electronic device 100-1 receives, from the user, a selection of at least a portion of friends in the friend list. In step 411, the first electronic device 100-1 sends, to the management server 200, a request for a group invitation message. The group invitation message may include account information or identification information of the at least a portion of friends selected by the user.

If the management server 200 receives the request for the group invitation message the first electronic device 100-1, in step 413, the management server 200 transmits the requested group invitation message to a second electronic device 100-2. The management server 200 may transmit the group invitation message to an electronic device corresponding to the account information or identification information of the at least a portion of friends included in the group invitation message.

In step 415, the second electronic device 100-2 receives an acknowledgment instruction about the group invitation from a user of the second electronic device 100-2. In step 417, the second electronic device 100-2 transmits the acknowledgment instruction to the management server 200.

In step 419, the management server 200 adds the second electronic device 100-2 (or a user of the second electronic device 100-2), transmitting the acknowledgment instruction, to a group member. In step 421, the management server 200 may transmit mission performance information of the group member to the first electronic device 100-1 and the second electronic device 100-2. The management server 200 may transmit the mission performance information of the group member to all group members.

In step 423, the first electronic device 100-1 and the second electronic device 100-2 display group member information (e.g., a profile image or mission performance information of a group member). The first electronic device 100-1 and the second electronic device 100-2 may display group member information based on the mission performance information of the group member. For example, the first electronic device 100-1 and the second electronic device 100-2 may display group member information for each group member in order based on a mission progress situation. Accordingly, a user included in a specific group may check a mission progress state of another group member. Providing this form of information may attract active participation through competition between group members.

In step 425, the first electronic device 100-1 sends, to the management server 200, a request to transmit a message to the second electronic device 100-2. For example, the user may select a specific group member and directly input a message to be transmitted to the specific group member or may request transmission of a previously set message.

In step 427, the management server 200 transmits the requested message to the second electronic device 100-2. The management server 200 may also transmit a message to the user that requested transmission of the message.

In step 429, the management server 200 transmits a response message to the first electronic device 100-1. The management server 200 may store a response message set by the second electronic device 100-2. If a message is received from any other electronic device, the management server 200 may transmit a set response message to an electronic device designated to receive set the response message.

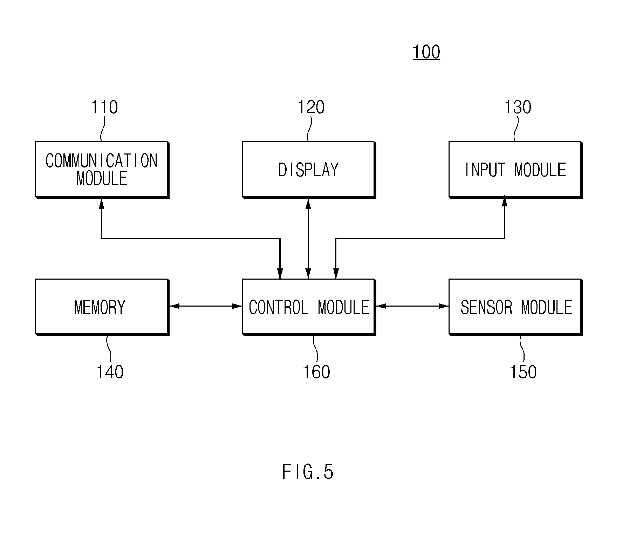

FIG. 5 illustrates an electronic device according to an embodiment of the present disclosure.

Referring to FIG. 5, the electronic device 100 includes a communication module 110, a display 120, an input module 140, a sensor module 150, and a control module 160.

The communication module 110 communicates with the management server 200 or the wearable device 400 to exchange information therewith. The communication module 110 may be connected with the management server 200 through an internet network or a mobile communication network and with the wearable device 400 through a Bluetooth or Wi-Fi connection.

The communication module 110 may transmit account information to the management server 200. The account information may include, for example, an account ID and password or identification information (e.g., MSISDN, IMEI, ESN, and the like) of the electronic device 100.

The communication module 110 may receive item information from the management server 200. The item information may include, for example, at least one of an item name, an item image, a price, a production date, a mission given to an item, a mission completion reward, a deadline for mission completion, a quantity of a mission completion reward, a ranking of all users selecting an item, the remainder of a mission completion reward, and the time remaining until a mission end time. The communication module 110 may be provided with a mission completion reward from the management server 200.

The communication module 110 may transmit mission performance information to the management server 200. The communication module 110 may receive mission performance information from the wearable device 400. The communication module 110 may receive wearable device information from the wearable device 400 and may transmit the wearable device information to the management server 200. The wearable device information may include, for example, an ESN, a MAC address, and a Bluetooth address of the wearable device 400.

The communication module 110 may request the management server 200 to create a group. The communication module 110 may request a group invitation message from the management server 200 and may receive the group invitation message from the management server 200. The communication module 110 may request a message of the management server 200 and may receive a message or a response message from the management server 200. The communication module 110 may transmit and receive mission performance information of a group member.

The communication module 110 may receive a beacon signal or item information from a peripheral electronic device which is located within a range in which communication with the electronic device 100 is possible.

The display 120 may display an execution screen of an application executed by the control module 150. The display 120 may display the application execution screen based on a UI that an application provides. The display 120 may display a UI including item information. For example, the UI may include pages associated with under-selection item information, provided reward information, all item information, recommendation item information, and friend invitation information. A plurality of information pages included in the UI may be placed to move to another page through the recommendation item information page.

The display 120 may display push notification or a notification window. For example, the display 120 may display specific information using the notification window when the item information providing application is executed and may display specific information using the push notification when an item information providing application is not executed.

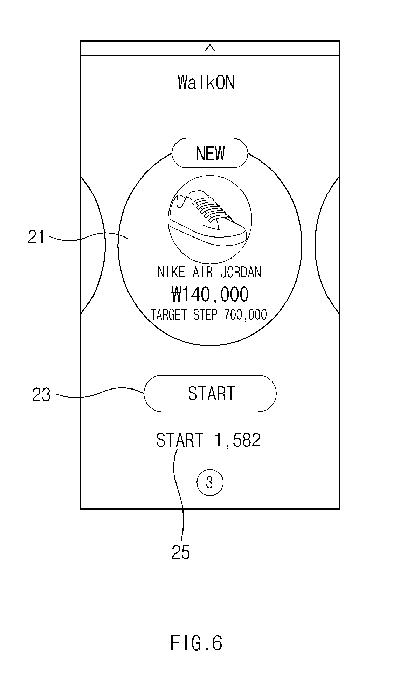

Various application execution screens to be displayed on the display 120 are described in detail herein with reference to FIGs. 6 to 10.

The input module 130 may receive a user manipulation. For example, the input module 130 may receive an item selection instruction for selecting at least one item displayed on the display 120. Alternatively, the input module 130 may receive a friend selection instruction for creating a group corresponding to the selected item and transmitting a message regarding the group. The input module 130 may include, for example, a touch screen or touch pad that operates in response to a touch input of a user, a keyboard, a mouse, a motion recognition sensor recognizing a motion of the user, or a voice recognition sensor that recognizes a voice of the user.

The memory 140 may store information to be used an item information providing service including, for example, account information of a user, wearable device information, information indicating whether a wearable device is registered, information of a selected item, mission performance information corresponding to the selected item, and a reward about completion of a given mission.

The sensor module 150 may collect motion data of the electronic device 100. The sensor module 150 may include various sensors for collecting motion data of the electronic device 100. The sensor module 150 may include, for example, an acceleration sensor, a gyro sensor, a GPS, and the like.

The control module 150 may control the communication module 110, the display 120, the input module 130, the memory 140, and the sensor module 150, respectively, and may provide a user with item information.

If a specific item is selected by a user, the control module 160 may control the sensor module 150 to obtain mission performance information corresponding to the selected item. For example, if a specific item is selected by a user, the control module 160 may control activation of the sensor module 150 and collect motion data of the electronic device 100. The control module may obtain mission performance information using the collected motion data. If mission performance information is obtained, the control module 160 may check the mission performance information. For example, the control module 160 may count the obtained mission performance information and may calculate a cumulative value; the control module 160 may check a state of mission performance information based on the cumulative value. If the mission performance information corresponds to a predefined state (e.g., a mission progress state of 30%, 50%, or 70%), the control module 160 may control the display 120 to display item information of the selected item. The electronic device 100 may check the time until a mission end time and may control the display 120 to display information of the selected item based on the checked time. For example, if the time until a mission end time corresponds to one day (or 12 hours), the electronic device 100 may control the display 120 to display information of the selected item. The control module 160 may control the display 120 to display item information of the selected item using push notification or a notification window. The control module 160 may control the display 120 to display mission performance information or any other item information associated with the selected item together with item information of the selected item.

If a group creation instruction is received from a user, the control module 160 control the communication module 110 to transmit, to the management server 200, a request to create a group. If an instruction for selecting a friend to be added to a group is received, the control module 160 may control the communication module 110 to transmit, to the management server 200 a request for a group invitation message. If group invitation is successfully completed, the control module 160 may provide an additional mission point as a reward about friend invitation.

If mission performance information of a group member is received from the management server 200, the control module 160 may control the display 120 to display group member information based on the mission performance information of the group member. If a message request instruction is received from a user, the control module 160 may control the communication module 110 to transmit a message to a friend that the user selects. For example, the control module 160 may control the communication module 110 to transmit, to the management server 200, a request to transmit a message to a friend.

If mission performance information is received from the wearable device 400, the control module 160 may check whether the wearable device 400 is registered at the management server 200. If the wearable device 400 is a device registered at the management server 200, the control module 160 may include mission performance information received from the wearable device 400 in a cumulative value or may transmit the mission performance information to the management server 200.

If a beacon signal is received from a peripheral electronic device located at a range where communication with the electronic device 100 is possible, the control module 160 may determine whether a mission completion reward corresponding to the beacon signal exists. If the mission completion reward corresponding to the beacon signal exists, the control module 160 may control the display 120 to display information about the mission completion reward. For example, when a user enters a shop where the user is capable of using the mission completion reward, the electronic device 100 may receive a beacon signal from a peripheral electronic device in the shop and may inform the user that the mission completion reward is usable.

If item information is received from a peripheral electronic device located at a range where communication with the electronic device 100 is possible, the control module 160 may control the display 120 to display a UI including the item information received from the peripheral electronic device. For example, when the user enters a department store, a hypermarket, and the like, the electronic device 100 may receive item information, including a mission completion reward usable in the department store, from the peripheral electronic device and may inform the user of the item information.

FIG. 6 illustrates a UI displayed on an electronic device according to an embodiment of the present disclosure.

FIG. 6 shows a recommendation item page. Referring to FIG. 6, the recommendation item page includes an area 21 displaying item information such as an item photo, an item name, an item price, a target mission, and the like. The recommendation item page includes an item selection icon 23. When a user taps the icon 23 to select an item, a guide notification window (or a popup window) about the selected item may be provided, and a mission about a corresponding item may start. If another item is selected, with an item selected, a notification window for checking whether an item is changed may be displayed. The recommendation item page may include the number of users 25 (e.g., "START 1,582") that selects a corresponding item and performs a mission.

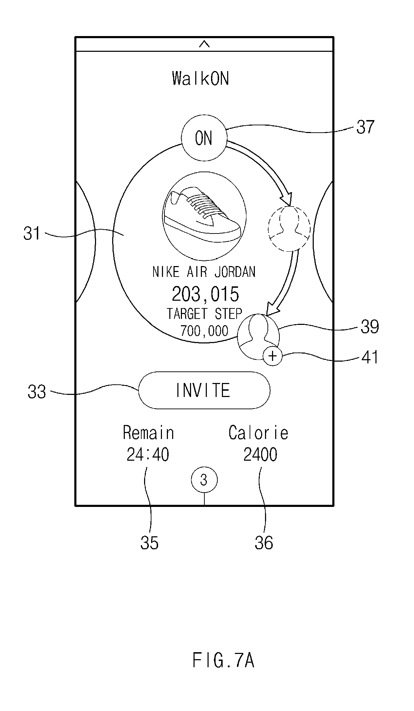

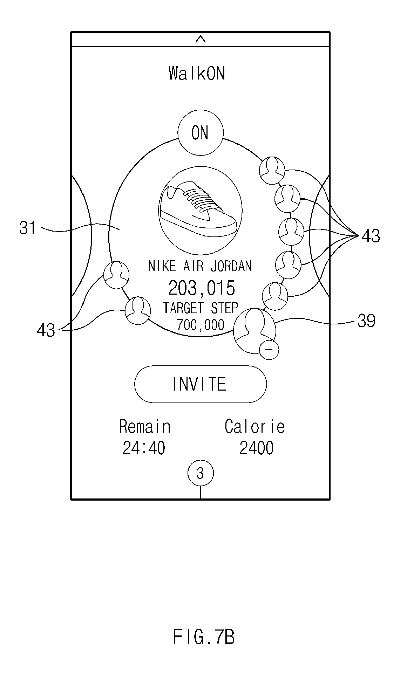

FIGs. 7A and 7B illustrate UIs displayed on an electronic device according to an embodiment of the present disclosure.

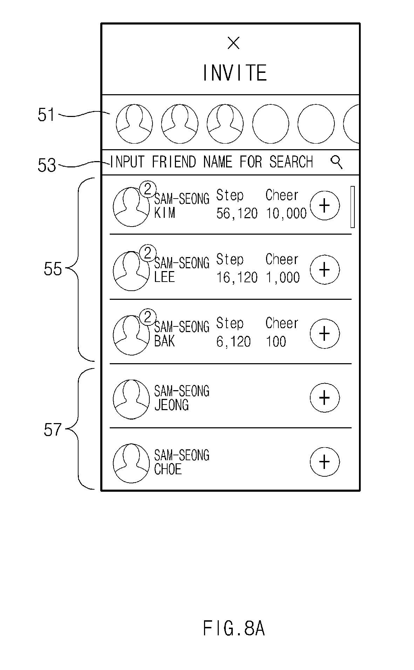

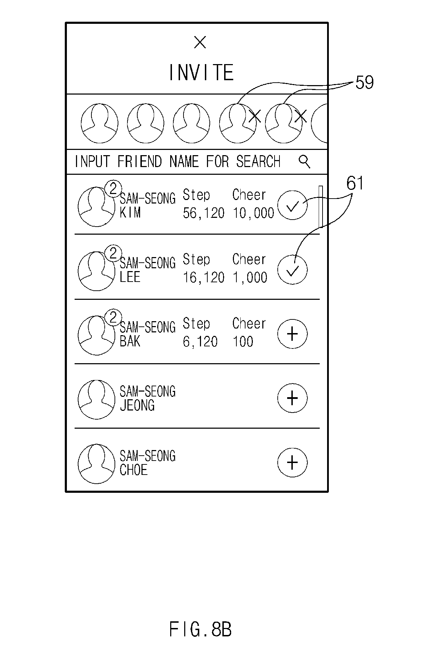

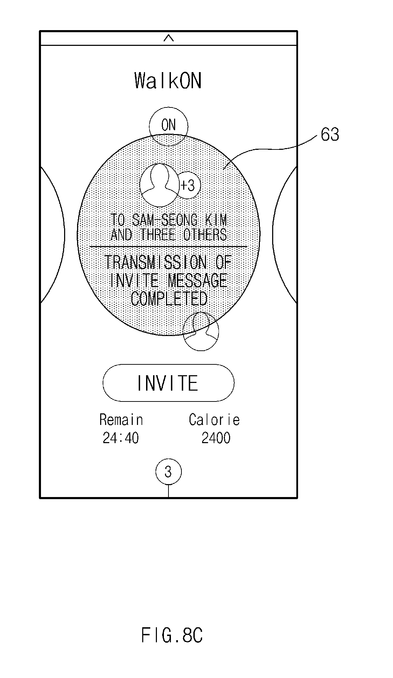

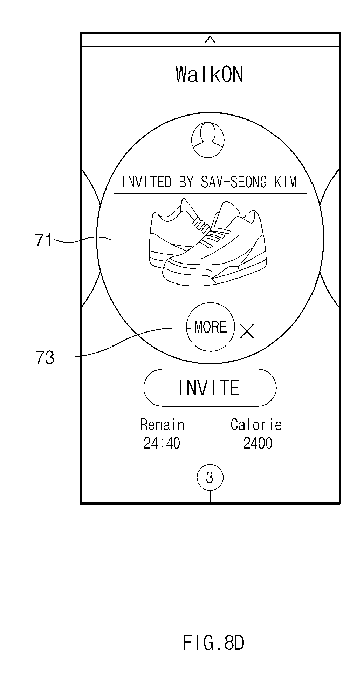

FIG. 7A shows an under-selection item page. Referring to FIG. 7A, an under-selection item page includes an area 31 displaying item information such as an item photo, an item name, a mission progress state, a target mission, and the like. The under-selection item page includes a friend invitation icon 33. A friend invitation page may be displayed if a user taps the friend invitation icon 33. The friend invitation page is described in detail with reference to FIG. 8. The under-selection item page includes the time remaining 35 until a mission end time. The under-selection item page displays a predicted consumption calorie 36 according to a mission progress state. The under-selection item page includes an icon 37 indicating that a corresponding item is being selected. The under-selection item page displays a profile image 39 of a user. A location of the profile image of the user may be changed according to the mission progress state. For example, referring to FIG. 7A, the profile image may be located at the boundary of the area 31 including item information and may move in a clockwise direction based on the mission progress state.

The under-selection item page includes a group member display icon 41. If a user selects the icon 41, as illustrated in FIG. 7B, profile images 43 of other group members may be displayed. Referring to FIG. 7B, the size of each of the profile images 43 of the group members may be smaller than that of the profile image 39 of the user. The profile images of other group members may be located at the boundary of the area 31 including item information and may move in a clockwise direction based on a mission progress state. Accordingly, the user may check mission progress states or rankings of group members. Such a display of information may attract active participation through competition between group members.

FIGs. 8A to 8D illustrate UIs displayed on an electronic device according to an embodiment of the present disclosure.

FIG. 8A shows a friend invitation page. If a user taps the friend invitation icon 33 on the under-selection item page illustrated in FIG. 7A, a friend invitation page illustrated in FIG. 8A may be displayed. Referring to FIG. 8A, the friend invitation page includes an area 51 that displays information regarding members participating in a current group and invitation-possible personnel (i.e., personnel that may be invited to participate in the group). The friend invitation page includes a search area 53 searching for a friend. The user may input a friend name on the search area 53 to search for a specific friend. The friend invitation page includes friend list areas 55 and 57. The friend list area 55 includes information regarding friends that install an item information providing application and the friend list area 57 includes information regarding friends that don't have the item information providing application installed on their respective devices. The friend list areas 55 and 57 may place friend lists in the following order, for example: friends having an invitation history, friends that have installed an item information providing application, and a friend that not installed the item information providing application. The friend list area 55 of friends that have installed the item information providing application may include profile images, names, mission progress states associated with an item being selected, the number of encouragement messages received, or friend selection icons. The friend list area 57 of friends that don't have the item information providing application installed on their devices may include profile images, names, or friend selection icons. The user may tap a friend selection icon included in the friend list areas 55 and 57 and may select a friend that the user wants to invite to a group.

If the user taps a friend selection icon, as illustrated in FIG. 8B, profile images 59 of selected friends may be added to the area 51 displaying an invitation-possible personnel. The friends that the user selects may be displayed by changing friend selection icons 61 included in the friend list area 55.

If selection of a friend that the user invites to a group is completed, the electronic device 100 may transmit an invitation message to the selected friend. If the invitation message is transmitted, as illustrated in FIG. 8C, the friend invitation page may move to the item information page being selected, and a notification window informing a user that transmission of the invitation message is completed may be displayed.

FIG. 8D shows a UI displayed on an electronic device that has received the invitation message. Referring to FIG. 8D, if the invitation message is received, a notification window 71 including a profile image of an inviting person, a name of the inviting person, and an item image is displayed. When a corresponding application is not currently-being executed upon receipt of the invitation message, the invitation message may be displayed through push notification. If the user selects a details icon 73 included in the notification window 71, a notification window including various item information of a corresponding item may be displayed.

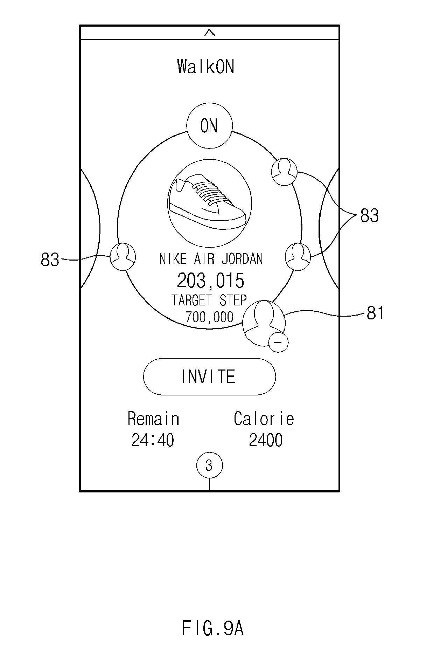

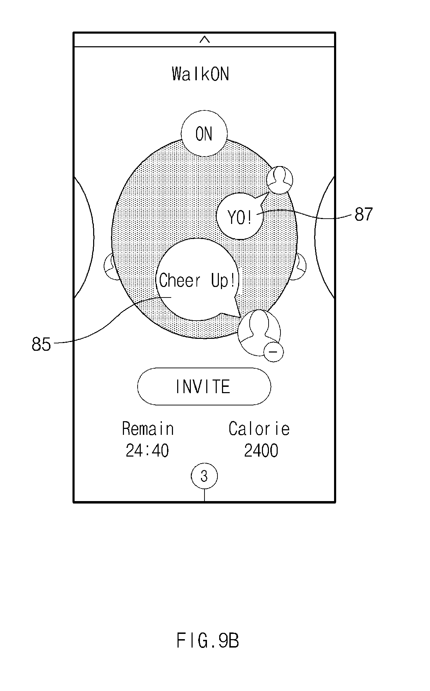

FIGs. 9A and 9B illustrate UIs displayed on an electronic device according to an embodiment of the present disclosure.

FIG. 9A shows an under-selection item page. The under-selection item page includes profile images 81 and 83 of group members. If a user taps one of profiles 83 of other users included in a group, a message may be sent to the selected user. Referring to FIG. 9B, if the message is sent, a message in the form of a speech bubble is displayed extending from a profile image of a user. Furthermore, if a response message is received from any other user receiving a message, a response message 87 in the form of a speech bubble shape is displayed extending from a profile image of the any other user.

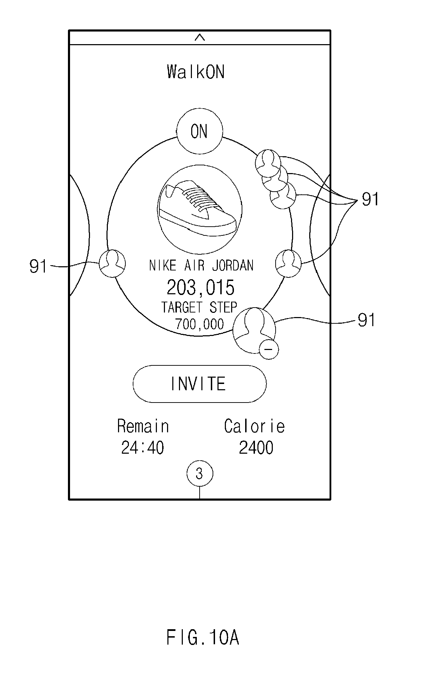

FIGs. 10A to 10C illustrate UIs displayed on an electronic device according to an embodiment of the present disclosure.

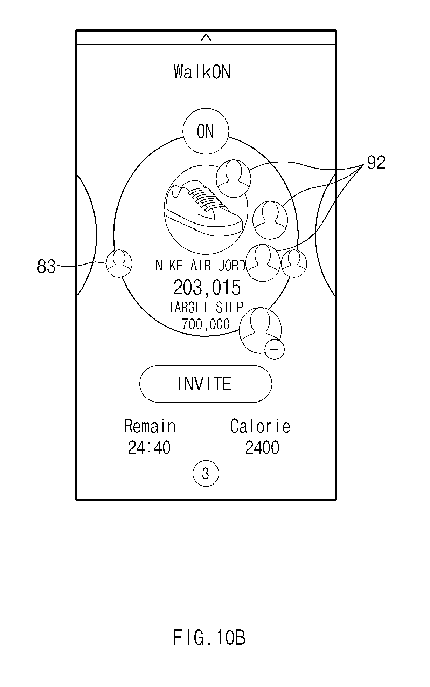

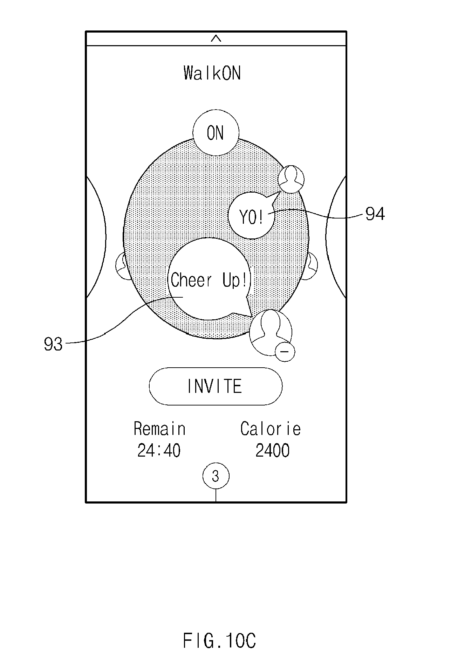

FIG. 10A shows an under-selection item page. The under-selection item page includes profile images 91 of group members. Referring to FIG. 10A, profile images of a plurality of group members may be displayed in an overlapping manner. If a user taps the overlapping profile images, as illustrated in FIG. 10B, profile images 92 are displayed such that the sizes and locations are changed so as not to overlap each other. If the user taps one of the changed profile images 92, a message may be sent to a selected user. Referring to FIG. 10C, if the message is sent to the selected user, a message 93, in the form of a speech bubble, is displayed extending from a profile image of a user. Furthermore, if a response message is received from another user that has received a message, a response message 94, in the form of a speech bubble, is displayed extending from a profile image of the other user.

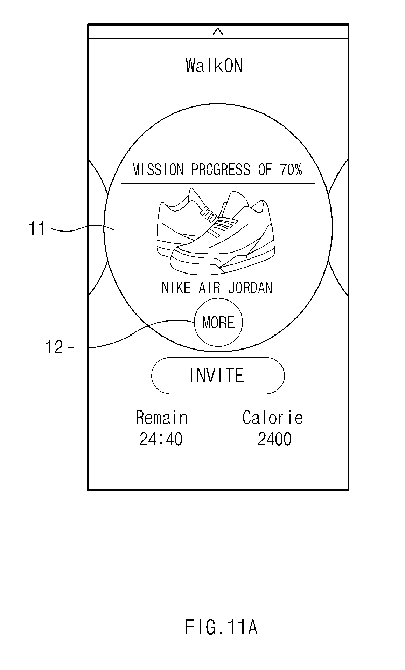

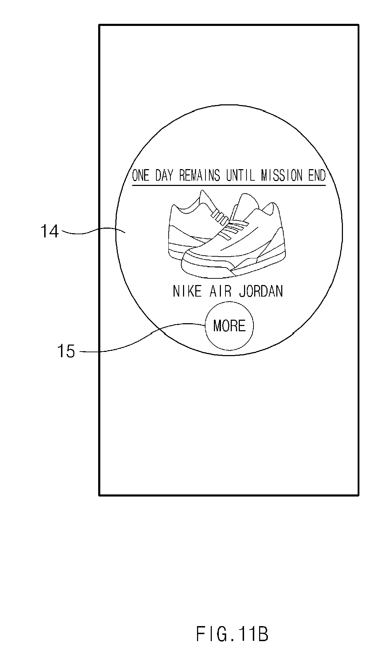

FIGs. 11A and 11B illustrate UIs displayed on an electronic device according to an embodiment of the present disclosure.

Referring to FIG. 11A, the electronic device 100 may display item information of a selected item based on a state of mission performance information (or a mission progress state). Referring to FIG. 11A, the electronic device 100 displays a notification window 11 including the item information (e.g., an item name and an item image) of the selected item and a mission progress state. A notification window including various item information of a corresponding item may be displayed if a user selects a details icon 12 included in the notification window 11.

The electronic device 100 may display the item information of the selected item based on the time remaining until a mission end time. Referring to FIG. 11B, the electronic device 100 displays a push notification 14 including the item information (i.e., an item name and an item image) of the selected item and the time remaining until the mission end time. If a user selects a details icon 15 included in the push notification 14, the electronic device 100 may execute an item information providing application and may display a notification window including various item information of a corresponding item.

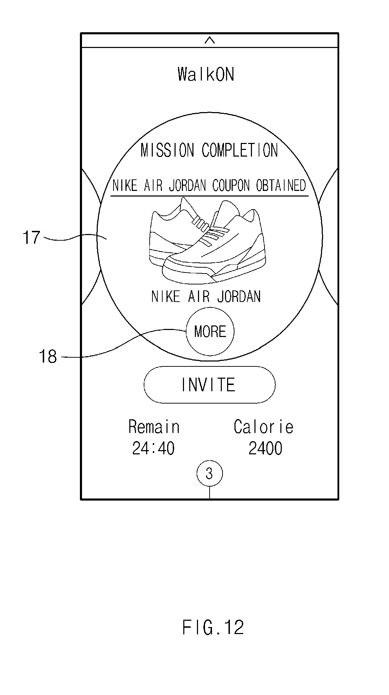

FIG. 12 illustrates a UI displayed on an electronic device according to an embodiment of the present disclosure.

Referring to FIG. 12, if a mission completion reward is received from the management server 200, the electronic device 100 displays a notification window 17 that includes item information (e.g., an item name and an item image) of a selected item and information regarding the mission completion reward. A notification window including various item information of a corresponding item, a mission completion reward using method, and the like may be displayed if a user selects a details icon 18 included in the notification window 17.

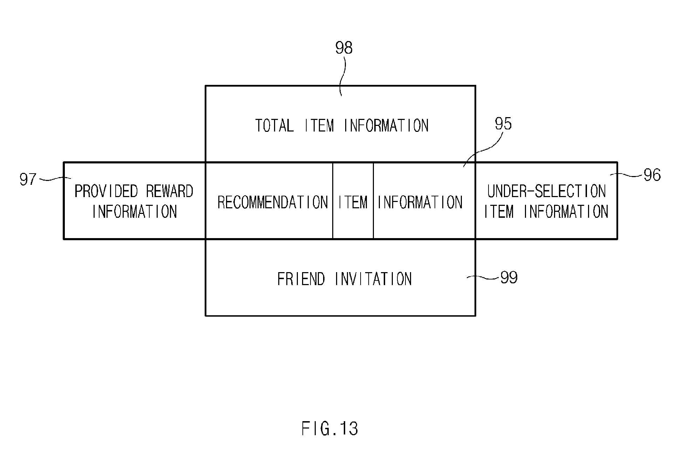

FIG. 13 illustrates a page placement state of a UI according to an embodiment of the present disclosure.

Referring to FIG. 13, a UI according to an embodiment of the present disclosure includes a recommendation item information page 95, an under-selection item information page 96, a provided reward information page 97, a total item information page 98, and a friend invitation page 99. Information of an item recommended by the management server 200 is displayed on the recommendation item information page 95. The recommendation item information page 95 may include a plurality of (e.g., three) recommendation item information pages. The under-selection item information page 96 displays item information of an item selected by a user. Information about all items received from the management server 200 is displayed on the total item information page 98, and item information for a specific category (e.g., a kind of item or a provider) may be provided. The total item information page 98 may provide a UI that enables a search for a specific item. A UI for inviting a friend to a group may be displayed on the friend invitation page 99.

A plurality of information pages included in the UI may be displayed in response to selections performed through the recommendation item information page. Referring to FIGs. 11 and 13, in the present example, the under-selection item information page 96 is placed to the right of the recommendation item information page 95, the provided reward information page 97 is placed to the left of the recommendation item information page 95, the total item information page 98 is placed above the recommendation item information page 95, and the friend invitation page 99 is placed below the recommendation item information page 95. According to an embodiment of the present disclosure, movement from a specific page to another page may be performed by a swipe manipulation or a tap manipulation of a user. For example, if the recommendation item information page 95 is the currently displayed page, the electronic device 100 will switch to displaying the provided reward information page 97, if a swipe manipulation to the right is received. Alternatively, the electronic device 100 will switch to displaying the total item information page 98 if a swipe manipulation into a downward direction is received while the recommendation item information page 95 is being displayed.

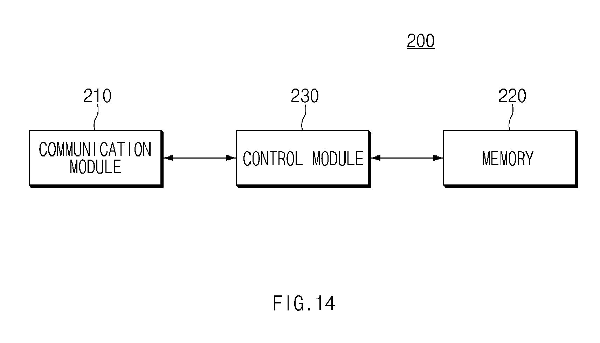

FIG. 14 illustrates a configuration of a management server according to an embodiment of the present disclosure.

Referring to FIG. 14, the management server 200 includes a communication module 210, a memory 220, and a control module 230.

The communication module 210 may communicate with the electronic device 100 or the advertiser server 300 for data exchange. The communication module 210 may be connected with the electronic device 100 or the advertiser server 300 through an internet network or a mobile communication network.

The communication module 210 may receive account information from the electronic device 100. The communication module 210 may receive item information from the advertiser server 300 and may transmit the item information to the electronic device 100. The management server 200 may transmit item information (e.g., a ranking of all users selecting an item, the time until a mission end time, the reset of a mission completion reward, and the like), additionally generated according to a mission progress, as well as the item information received from the advertiser server 300. The communication module 210 may receive mission performance information from the electronic device 100. The communication module 210 may provide a mission completion reward to the electronic device 100. The communication module 210 may receive wearable device information from the electronic device 100. The communication module 210 may receive a group creation request and a group invitation request from the electronic device 100. The communication module 210 may transmit the group invitation message to the electronic device 100. The communication module 210 may transmit mission performance information of a group member(s) to the electronic device 100. The communication module 210 may transmit a message or a response message to the electronic device 100. The communication module 210 may transmit statistical information to the advertiser server 300. For example, the communication module 210 may transmit information regarding an age, a sex, a simultaneously selected item, a mission progress state, an item exposure count, an item selection count, a mission completion count, and the like of users that select an item provided by the advertiser server 300.

The memory 220 may store various information used in performing an item information providing service, such as account information of a user, wearable device information, information indicating whether a wearable device has been registered, selected item information, group information, a mission completion reward, and the like. The memory 220 may store wearable device information, selected item information, group information, a mission performance state, and the like in the form of database for an account of a user.

The control module 230 may control an overall operation of the management server 200. The control module 230 may respectively control the communication module 210 and the memory 220 and may provide item information to a user.

If account information is received from the electronic device 100, the control module 230 may perform user authentication using the received account information. If the user authentication is completed, the control module 230 may control the communication module 110 to transmit item information to the electronic device 100. If item information stored at the memory 220 is updated, the control module 230 may control the communication module 110 to transmit the updated item information to the electronic device 100.

If mission performance information is received from the electronic device 100, the control module 230 may determine whether a mission is completed, based on the mission performance information. If the mission is completed, the control module 230 may control the communication module 210 to provide a mission completion reward to the electronic device 100.

If wearable device information is received from the electronic device 100, the control module 230 may register the wearable device 400. For example, the control module 230 may store wearable device information in the memory 220 in connection with account information received from the electronic device 100. If the wearable device 400 is registered, the control module 230 may control the communication module 210 to transmit information, indicating that registration of the wearable device 400 is completed, to the electronic device 100.

If a group invitation acknowledgement instruction is received from an electronic device receiving the group invitation message, the control module 230 may add an electronic device (or a user of an electronic device) that transmitted the acknowledgement instruction to a list of group members.

The control module 230 may set a level of a user based on a mission performance completion count of the user. The control module 230 may set the number of items (or missions) that are capable of being simultaneously selected to greater values with respect to users with higher levels.

A mission given to a selected item may include a group mission that is managed by the specific group. If a group mission is given to a selected item, the control module 230 may determine whether a group mission is completed, based on a total (e.g., a sum) of mission performance information of members included in a specific group. If the group mission is completed, the control module 230 may control the communication module 210 to provide a group mission completion reward to all members included in the specific group.

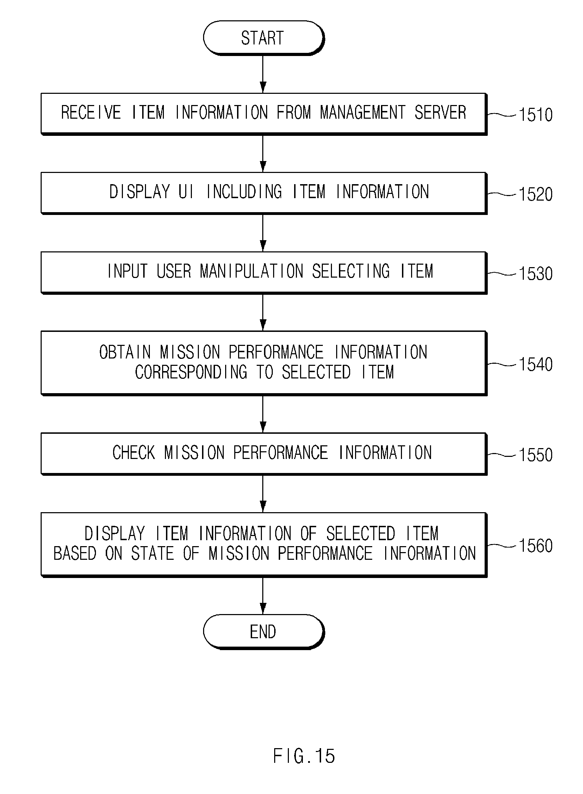

FIG. 15 is a flow chart illustrating an item information providing method of an electronic device according to an embodiment of the present disclosure. The flow chart illustrated in FIG. 15 may include operations performed by the electronic device 100 illustrated in FIGs. 1 to 5. The description regarding the electronic device 100 given with respect to FIGs. 1 to 5 hereinabove is applied to the method corresponding to the flow chart illustrated in FIG. 15.

Referring to FIG. 15, in step 1510, the electronic device 100 receives item information from the management server 200. The item information may include, for example, at least one of an item name, an item image, a price, a production date, a mission given to an item, a mission completion reward, a deadline for mission completion, quantity of a mission completion reward, a ranking of all users that have selected an item, the remainder of a mission completion reward, or the time remaining until a mission end time.

In step 1520, the electronic device 100 displays a UI including item information. For example, the UI may include pages associated with under-selection item information, provided reward information, total item information, recommendation item information, or friend invitation information. A plurality of information pages included in the UI may be displayed in response to a selection performed through the recommendation item information page.

In step 1530, the electronic device 100 receives a user manipulation for selecting an item.

The electronic device 100 obtains mission performance information corresponding to the selected item, in step 1540. For example, the electronic device 100 may collect motion data of the electronic device 100 using an acceleration sensor, a gyro sensor, a GPS, and the like, and may obtain mission performance information based on the collected motion data.

In step 1550, the electronic device 100 checks the mission performance information. For example, the electronic device 100 may count the obtained mission performance information to calculate a cumulative value and may check current mission performance information based on the cumulative value.

In step 1560, the electronic device 100 displays item information of a selected item, based on a state of the mission performance information. For example, if the mission performance information corresponds to a predefined state (e.g., mission progress of 50% or mission progress of 70%), the electronic device 100 may display the item information of the selected item.

The electronic device 100 checks the time remaining until a mission end time and displays the item information of the selected item based on the checked time. For example, the electronic device 100 may display the item information of the selected item, if the time remaining until the mission end time is one day (or 12 hours).

The electronic device 100 may display other item information associated with a mission performance state or a selected item, together with the item information of the selected item.

If a group creation instruction is received from a user, the electronic device 100 may send a request to the management server 200 to create a group. If an instruction selecting a friend to be added to a group is received, the electronic device 100 sends a request for a group invitation message to the management server 200. If group invitation is successfully completed, the electronic device 100 may provide an additional mission point as a reward corresponding to the friend invitation.

If mission performance information of a group member is received from the management server 200, the electronic device 100 may display group member information based on the mission performance information of a group member.

If a message request instruction is received from a user, the electronic device may transmit a message to a friend that the user selects. For example, the electronic device 100 may transmit a message to a friend through the management server 200.

If mission performance information is received from the wearable device 400, the electronic device 100 may check whether the wearable device 400 is registered at the management server 200. If the wearable device 400 is registered at the management server 200, the electronic device 100 may include the mission performance information, received from the wearable device 400, in a cumulative value or may transmit the mission performance information to the management server 200.

If a beacon signal is received from a peripheral electronic device located at a range where communication with the electronic device 100 is possible, the electronic device 100 may determine whether a mission completion reward corresponding to the beacon signal exists. If the mission completion reward corresponding to the beacon signal exists, the electronic device 100 may control the display 120 to display information about the mission completion reward. For example, when a user enters a shop where the user is capable of using the mission completion reward, the electronic device 100 may receive a beacon signal from a peripheral electronic device in the shop and may inform the user that the mission completion reward is usable.

If item information is received from a peripheral electronic device located within a range at which communication with the electronic device 100 is possible, the electronic device 100 may control the display 120 to display a UI including the item information received from the peripheral electronic device. For example, when the user enters a department store, a hypermarket, and the like, the electronic device 100 may receive item information, including a mission completion reward usable in the department store, from the peripheral electronic device and may inform the user of the item information.

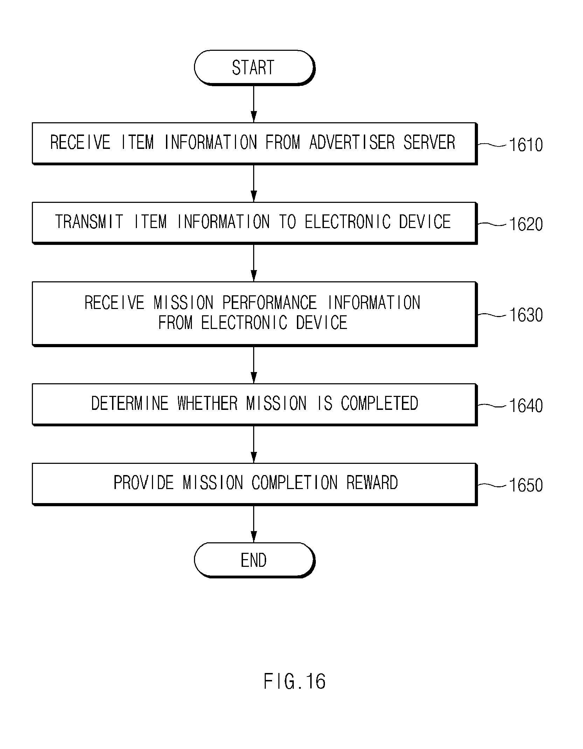

FIG. 16 is a flow chart illustrating an item information providing method of a management server according to an embodiment of the present disclosure. The flow chart illustrated in FIG. 16 includes operations performed by the management server 200 illustrated in FIGs. 4 to 14. The description regarding the management server 200 given hereinabove with respect to FIGs. 4 to 14 is applied to the method of the flow chart illustrated in FIG. 16.

Referring to FIG. 16, in step 1610, the management server 200 receives item information from the advertiser server 300.

In step 1620, the management server 200 transmits item information to the electronic device 100. The management server 200 may provide the electronic device 100 with additional item information (e.g., a ranking of all users selecting an item, the rest of a mission completion reward, the time until a mission end time, and the like) generated according to mission progress, as well as item information received from the advertiser server 300.

If account information is received from the electronic device 100, the management server 200 may perform user authentication using the received account information. If the user authentication is completed, the management server 200 may transmit item information to the electronic device 100. If item information stored at the memory 220 is updated, the control module 230 may control the communication module 210 to transmit the updated item information to the electronic device 100.

The management server 200 receives mission performance information from the electronic device 100, in step 1630. In step 1640, the management server 200 determines whether a mission is completed, based on the mission performance information. For example, the management server 200 may compare a mission given to a selected item with the mission performance information and may determine whether a mission is completed.

If the management server 200 determines that the mission is completed, in step 1650, the management server 200 provides a mission completion reward to the electronic device 100. The mission completion reward may be provided in various forms such as a bar code, a QR code, a number code, a NFC stamp, and the like.

If the management server 200 receives wearable device information from the electronic device 100, the management server 200 may register the wearable device 400. For example, the management server 200 may store wearable device information at the memory 220 in connection with account information received from the electronic device 100. If the wearable device 400 is registered, the management server 200 may transmit information, indicating that registration of the wearable device 400 is completed, to the electronic device 100.

If a group invitation acknowledgement instruction is received from an electronic device receiving the group invitation message, the management server 200 may add an electronic device (or a user of an electronic device) that transmitted the acknowledgement instruction to a list of group members.

The management server 200 may set a level of a user based on a mission performance completion count of the user. The management server 200 may set the number of items (or missions) that are capable of being simultaneously selected to greater values with respect to user with higher levels.

If a group mission is given to a selected item, the management server 200 may determine whether a group mission is completed, based on a total (or a sum) of mission performance information of members included in a specific group. If the group mission is completed, the management server 200 may provide a group mission completion reward to all members included in the specific group.

Herein, the term "module" may represent, for example, a unit including one or more of hardware, software and firmware. The term "module" may be interchangeably used with the terms "unit", "logic", "logical block", "component" and "circuit". A module may refer to a minimum unit of an integrated component or may be a part thereof. A module may be a minimum unit for performing one or more functions or a part thereof. A module may be implemented mechanically or electronically. For example, a module may include an application-specific IC (ASIC) chip, a field-programmable gate array (FPGA), and/or a programmable-logic device for performing some operations, including those which are already known or have yet to be developed.

At least a portion of an apparatus (e.g., modules or functions thereof) or a method (e.g., operations) according to an embodiment of the present disclosure may be, for example, implemented by instructions stored in a computer-readable storage media in the form of a program module. The instruction, when executed by a processor (e.g., the control module 130 or 230), may cause the one or more processors to perform a function corresponding to the instruction. The computer-readable storage media, for example, may be the memory 140 or 220.

A computer-readable recording media may include a hard disk, a magnetic media, a floppy disk, a magnetic media (e.g., a magnetic tape), an optical media (e.g., a compact disc read only memory (CD-ROM) and a digital versatile disc (DVD), a magneto-optical media (e.g., a floptical disk), and hardware devices (e.g., a read only memory (ROM), a random access memory (RAM), or a flash memory). Also, a program instruction may include, not only machine code, such as things generated by a compiler, but also high-level language code executable on a computer using an interpreter. The above-described hardware unit may be configured to operate via one or more software modules for performing an operation of the present disclosure, and vice versa.

A module or a program module according to an embodiment of the present disclosure may include at least one of the above elements, or a portion of the above elements may be omitted, or additional other elements may be further included. Operations performed by a module, a program module, or other elements according to an embodiment of the present disclosure may be executed sequentially, in parallel, repeatedly, or in a heuristic method. Also, a portion of operations may be executed in different sequences, omitted, or other operations may be added.

A mission may be provided to a user, and a reward may be provided to the user if mission performance is completed. Accordingly, it may be possible to provide information about a specific item to the user without resistance.

Users selecting a specific item may constitute a group to share mission progress states, thereby making it possible to attract active participation through completion between group members. Furthermore, a selected item may be continuously exposed to a user while the user performs a mission about a selected item, thereby increasing the number of events that item information is provided.

While the present disclosure has been shown and described with reference to certain embodiments thereof, it will be understood by those skilled in the art that various changes in form and detail may be made therein without departing from the scope of the present disclosure as defined by the appended claims and their equivalents.

## Claims

1. An electronic device (100) comprising:
a communication module (110) configured to receive item information of at least one item from a management server (200);
a display (120) configured to display a user interface, UI, including the item information;
an input module (130) configured to receive a user input selecting an item from among the displayed item information;
a sensor module (150) configured to collect motion data of the electronic device; and
a control module (160) configured to check a mission corresponding to the selected item and to transmit mission performance information, obtained based on the motion data, to the management server through the communication module.

2. The electronic device of claim 1, wherein the control module is further configured to display item information of the selected item on the display, if the mission performance information corresponds to a predefined state.

3. The electronic device of any of claims 1 or 2, wherein the control module is further configured to send, to the management server, through the communication module, a request to create a group, if a group creation instruction is received from a user, and
wherein the control module is configured further to send, if an instruction selecting a friend to be added to the group is received , to the management server, through the communication module, a request to send a group invitation message to the selected friend.

4. The electronic device of claim 3, wherein the control module is further configured to control the display module to display information of a group member based on mission performance information, if the mission performance information of the group member is received from the management server.

5. The electronic device of any of the previous claims, wherein the control module is further configured to check whether a wearable device (400) is registered at the management server, if mission performance information is received from the wearable device, and
wherein if the wearable device is a device registered at the management server, the control module is further configured to transmit, through the communication module, to the management server, the mission performance information received from the wearable device.

6. The electronic device of any of the previous claims, wherein the UI comprises an under-selection item information page, a provided reward information page, a total item information page, a recommendation item information page, and a friend invitation page, and
wherein each of a plurality of information pages included in the UI is displayable in response to user input provided while the recommendation item information page is displayed.

7. The electronic device of any of the previous claims, wherein the communication module is further configured to receive a beacon signal from a peripheral electronic device located within a communication range of the electronic device,
wherein the control module is further configured to determine whether a mission completion reward corresponding to the beacon signal exists, and
wherein if the mission completion reward corresponding to the beacon signal exists, the control module is further configured to control the display module to display information about the mission completion reward.

8. The electronic device of any of the previous claims , wherein the communication module is further configured to receive item information from a peripheral electronic device located within a communication range of the electronic device, and
wherein the control module is further configured to control the display module to display a user interface including item information received from the peripheral electronic device.

9. An item information providing method of an electronic device (100), comprising:
receiving item information of at least one item from a management server;
displaying a user interface, UI, including the item information;
receiving a user input selecting an item from among the displayed item information;
checking a mission corresponding to the selected item;
collecting motion data of the electronic device;
obtaining mission performance information based on the motion data; and
transmitting the mission performance information to the management server.

10. The item information providing method of claim 9, further comprising:
displaying item information of the selected item, if the mission performance information corresponds to a predefined state.

11. The item information providing method of any of claims 9 or 10, further comprising:
receiving a group creation instruction from a user;
sending, to the management server, a request to create a group;
receiving an instruction selecting a friend to be added to the group;
sending, to the management server a request to send a group invitation message to the selected friend.

12. The item information providing method of claim 11, further comprising:
receiving mission performance information of a group member from the management server; and
displaying information of the group member based on the mission performance information.

13. The item information providing method of any of claims 9 to 12, further comprising:
receiving mission performance information from a wearable device;
checking whether the wearable device is registered at the management server; and
transmitting the mission performance information received from the wearable device to the management server if the wearable device is registered at the management server.

14. The item information providing method of any of claims 9 to 13, wherein the UI comprises an under-selection item information page, a provided reward information page, a total item information page, a recommendation item information page, and a friend invitation page, and
wherein each a plurality of information pages included in the UI is displayable in response to user input provided while the recommendation item information page is displayed.

15. The item information providing method of any of claims 9-14, further comprising:
receiving a beacon signal from a peripheral electronic device located within a communication range of the electronic device;
determining whether a mission completion reward corresponding to the beacon signal exists, and
displaying information about the mission completion reward if the mission completion reward corresponding to the beacon signal exists.
